# EUROPEAN PATENT APPLICATION

(11) **EP 4 687 082 A1**
(43) Date of publication of application: **04.02.2026**
(21) Application number: 24191884.6
(22) Date of filing: 30.07.2024
(51) Int. Cl.: G06Q 10/04, G05B 23/02, G06Q 10/0635, G06Q 10/20

(54) **METHOD AND PROCESSING SYSTEM FOR AN ASSET STATE PREDICTION**

(71) Applicant: Hitachi Energy Ltd, 8050 Zürich (CH)
(72) Inventor: Schuderer, Jürgen, 8047 Zürich (CH)
(74) Representative: Meier, Florian

(57) **Abstract**

To perform an asset state prediction for an electric power system (11, 20), a processing system (30) is operative to estimate a hazard function that is indicative of a probability of asset failure as a function of a variable in absence of asset maintenance. The processing system (30) is operative to determine a hazard function parameter value for at least one hazard function parameter of the hazard function based on outage data for the electric power system (11, 20).

## Description

### TECHNICAL FIELD

Embodiments relate to methods, devices, and systems useful in association with asset maintenance of an asset of an electric power system. Embodiments of the invention relate in particular to such methods, devices, and systems that utilize a hazard function.

### BACKGROUND

Techniques for monitoring and/or predicting asset degradation in electric power systems are crucial for ensuring the reliability and efficiency of electric power systems. By utilizing such techniques, potential issues can be addressed by proactively planning for maintenance and upgrades. This can help prevent unexpected outages, reduce downtime, and extend the lifespan of assets.

The failure of assets in electric power systems can have catastrophic effects on a wide scale. For example, a transformer failure can lead to widespread power outages, disrupting essential services such as hospitals, public transportation, and communication networks. This can result in significant damage to components. In extreme cases, power outages can also pose risks to public safety, such as in extreme weather events where access to heating or cooling is essential. In addition to the immediate impact of asset failure, repairing or replacing damaged equipment can be a complex task.

Techniques useful in association with monitoring and/or predicting asset degradation can help identify potential issues early on, allowing maintenance to be scheduled during planned downtimes and emergency repairs to be avoided.

Predictive techniques for assets of electric power systems have become more complicated due to several factors related to the integration of new technologies and the evolving nature of the power grid. Some specific examples of technologies that are contributing to this complexity include High Voltage Direct Current (HVDC) transmission systems, distributed energy resources (DERs), and/or microgrids. High Voltage Direct Current (HVDC) transmission systems are being increasingly used to transmit large amounts of power over long distances with lower losses compared to traditional AC systems. The enhanced complexity for predictive asset-related techniques arises, inter alia, from the fact that HVDC systems require specialized equipment and that they may include redundant equipment in a primary system as well as redundant control and protection (C & P) subsystems in a secondary system of the HVDC system. The redundancy adds to the complexity of techniques related to asset degradation monitoring and/or prediction. DERs which may comprise components such as solar panels, wind turbines, and energy storage systems are being integrated into the grid to increase resilience and support renewable energy integration. The decentralized nature of DERs adds complexity to maintenance, as the components of DERs can be operated by different entities. Thus, the increasing complexity of modern electric power systems enhances the need for improved techniques useful in association with electric power grids, to thereby assist in the transition to more environmentally friendly electric power systems.

CN 110 110 933 B, S. R. Palakodeti et al., "Reliability Modeling and Simulation of Electric Substations - A Case Study," APPLICATIONS OF MODELLING AND SIMULATION, VOL 5, 2021, pp. 35-43, eISSN 2600-8084, and D.-L. Duan et al., "Reliability Evaluation in Substations Considering Operating Conditions and Failure Modes," IEEE TRANSACTIONS ON POWER DELIVERY, VOL. 27, NO. 1, JANUARY 2012, pp. 309-316 disclose techniques useful in association with assets of, e.g., an electric power system.

Thus, there is still a need in the art for enhanced techniques for predicting a state of an asset, which are useful in association with electric power system assets. There is in particular a need for such techniques which, compared to legacy techniques, allow failures or failure risks to be predicted in a more objective manner and/or allow maintenance to be initiated in a manner that is based on an improved prediction of an asset state.

### SUMMARY

It is an objective of the invention to provide a method and a processing system operative to provide improvements for the prediction of asset states. It is in particular an objective to provide such a method and a processing system that allow the risk of failure, the asset degradation, or other quantifiers relating to an asset degradation to be quantified in a more objective manner. It is an optional objective to provide such a method and a processing system that do not need to rely on hard imputation (i.e., an expert-based definition) of a hazard rate.

According to embodiments, a method, a processing system, and a machine-readable instruction code recited in the independent claims are provided. The dependent claims define preferred or advantageous embodiments.

According to an aspect of the invention, there is provided a method for an asset state prediction for an electric power system. The method comprises estimating, by at least one processing system, a hazard function, wherein the hazard function is indicative of a probability of asset failure as a function of a variable in absence of asset maintenance, wherein the hazard function has at least one hazard function parameter, wherein estimating the hazard function comprises: accessing outage data that comprise information on outages of electric power system assets during field operation in presence of maintenance; and determining a hazard function parameter value for the at least one hazard function parameter, the hazard function parameter value being determined based on the outage data. The method further comprises providing, by the at least one processing system, or using, by the at least one processing system, the hazard function parameter value for the asset state prediction.

Various effects and advantages are attained by the method. The method estimates the hazard function parameter value for the at least one hazard function parameter based on the outage data. Thereby, the processing system performing the method determines the hazard function parameter value for the at least one hazard function parameter in a data-driven manner. This provides an estimate for the hazard function that is more objective than one that relies on assumptions and/or human expert imputation regarding the hazard function. Thus, the quality of the asset state prediction is improved as compared to conventional techniques in which the hazard function is based on assumptions or human expert knowledge, as it is based on a hazard function that is determined in a data-driven manner. This ultimately improves the quality of any actions taken based on the asset state prediction, such as the generation and provision of alarms, warnings, or other status information, the verification of maintenance schedules, the determination of a suitable electric power system layout and/or redundancy configurations, the quantification of uncertainties of predictive state assessment, without being limited thereto.

The method also provides the technically effect that it allows the hazard function, which quantifies the risk of asset failure in the absence of maintenance, to be determined based on outage data that is collected during field operation while maintenance is being performed on assets. The effect of the maintenance is taken into consideration by the processing system when determining the hazard function parameter value for the at least one hazard function parameter. In other words, the method provides the effect of taking into consideration maintenance performed on an electric power system in which the outage data was collected, to thereby determine the hazard function which quantifies the risk of asset failure in the absence of maintenance.

Estimating the hazard function may further comprise determining at least one maintenance parameter value that is dependent on the maintenance of the electric power system assets; wherein the hazard function parameter value being determined based on both the outage data and the at least one maintenance parameter value.

Thereby, the maintenance parameter value(s) (such as parameters of predictive maintenance and/or condition-based maintenance performed in a time interval for which the outage data was obtained) may be used to determine the hazard function parameter value.

Determining the at least one maintenance parameter value may comprise accessing, by the at least one processing system, maintenance data indicative of the maintenance for at least some of the electric power system assets, wherein the at least one maintenance parameter value is determined based on the maintenance data.

Thereby, the processing system performing the method determines the hazard function parameter value for the at least one hazard function parameter in a data-driven manner, taking into account the maintenance that was performed. Thereby, the processing system performing the method determines the hazard function parameter value for the at least one hazard function parameter in a data-driven manner. This provides an estimate for the hazard function that is more objective than one that relies on assumptions and/or human expert imputation regarding the hazard function. Thus, the quality of the asset state prediction is improved as compared to conventional techniques in which the hazard function is based on assumptions or human expert knowledge, as it is based on a hazard function that is determined in a data-driven manner. This ultimately improves the quality of any actions taken based on the asset state prediction.

Determining the at least one maintenance parameter value may comprise estimating the at least one maintenance parameter value.

Thereby, missing or incomplete data on maintenance that was being performed may be supplemented based on objective criteria. For illustration, the at least one maintenance parameter value may be determined under the assumption of maintenance having been performed in a manner that is effective in accordance with an objective of a maintenance strategy, such as a condition based maintenance and/or predictive maintenance. Conformity with the objective of the maintenance strategy may respectively be assessed based on a target function that is to be minimized or maximized.

Estimating the at least one maintenance parameter value may comprise: setting at least one of a condition based maintenance (CBM) or predictive maintenance (PM) parameter value; performing a CBM or PM simulation; assessing an effectiveness of the at least one CBM or PM parameter value.

Thereby, missing or incomplete data on maintenance that was being performed may be supplemented based on objective criteria under the assumption of the CBM or PM having been performed in a manner that is effective (e.g., optimum) in accordance with a CBM or PM maintenance strategy.

Assessing the effectiveness may comprise evaluating a target function of the CBM or PM maintenance strategy to assess the effectiveness.

Thereby, the hazard function parameter value may be determined under the assumption that maintenance was performed in a manner considered to be effective based on the target function that objectively quantifies the effectiveness of the CBM or PM maintenance strategy.

Estimating the at least one maintenance parameter value may comprise its relatively repeating the steps of setting the at least one CBM or PM parameter value, performing a CBM or PM simulation, and assessing the effectiveness of the at least one CBM or PM parameter value.

Thereby, the hazard function parameter value may be determined in an iterative process to identify the CBM or PM parameter value that causes the CBM or PM maintenance strategy to be effective, based on the objective criterion quantitatively represented by the target function.

The at least one maintenance parameter value may comprise at least one general renewal process (GRP) parameter value.

Thereby, the effect of maintenance can be taken into account using GRP techniques. This allows the maintenance effects to be taken into consideration using techniques that are particularly suitable in the context of electric power system assets.

Determining the hazard function parameter value may comprise an iterative process including a plurality of iterations.

Thereby, the hazard function parameter value can be determined in an iterative process, to identify the hazard function parameter value that provides best consistency with the outage data as observed. This allows the hazard function parameter value to be determined in a data-driven manner, taking into consideration the outage data, a stochastic system degradation process, and the effects of maintenance.

Each of the plurality of iterations may comprise: setting a candidate hazard function parameter value; performing an repairable system simulation for at least one of the electric power system assets using the candidate hazard function parameter value, the repairable system simulation comprising a stochastic modelling of asset degradation of the at least one of the electric power system asset in presence of maintenance; and performing an evaluation of the candidate hazard function parameter value based on a comparison of the repairable system simulation and the outage data.

Thereby, the hazard function parameter value can be determined in an iterative process, to identify the one of the candidate hazard function parameter values that provides sufficient agreement (in accordance with an objective function) and/or maximum agreement (in accordance with the objective function) with the outage data as observed. This allows the hazard function parameter value to be determined in a data-driven manner, taking into consideration the outage data, a stochastic system degradation process, and the effects of maintenance.

The stochastic modelling may be performed based on the maintenance parameter value.

Thereby, the maintenance parameter value, which may in turn be determined in a data-driven manner or under the assumption of an optimum maintenance strategy, may be taken into account for determining the hazard function parameter value.

The hazard function may be a Weibull function.

Thereby, the techniques disclosed herein are used for estimating a hazard function that is particularly suitable for quantifying the risk of electric power system asset failures.

The Weibull function may represent the risk of asset failure as a function of the variable, wherein the variable is or comprises time.

Thereby, the techniques disclosed herein are used for estimating a hazard function that is particularly suitable for quantifying the risk of electric power system asset failures as a function of time.

The hazard function parameter value may be a Weibull function scale parameter value and/or a Weibull function shape parameter value.

Thereby, the techniques disclosed herein are used for determining a value of a hazard function parameter that used to be set based on an assumption in various conventional approaches and that has a particularly significant effect on the reliability and accuracy of the asset state prediction performed based on the hazard function.

The method further may comprise performing, by the at least one processing system or by a computing system different from the at least one processing system, the asset state prediction using the hazard function parameter value.

Thereby, the method comprises the use of the hazard function parameter value for the at least one hazard function parameter to perform the asset state prediction. Based on the improved techniques of determining the hazard function parameter value, the method thereby provides improved results for the asset state prediction, without having to rely on an assumption as to the hazard function parameter value.

The asset state prediction may comprise an asset state prediction over a predictive horizon.

Thereby, the asset state can be predictively determined over the predictive horizon that is in the future as compared to the time at which the asset state prediction is made. The asset state prediction over the predictive horizon allows the asset state prediction to be used for, e.g., the automatic generation of alerts, warnings, or other output based on a comparison of the asset state prediction with scheduled maintenance; the determination of changes to the configuration of the electric power system; the determination of a redundancy configuration for the electric power system; without being limited thereto.

The asset state prediction may comprise predicting the asset state over the predictive horizon as a function of time.

Thereby, the asset state over the predictive horizon allows the asset state prediction to be used for, e.g., the automatic generation of alerts, warnings, or other output based on a comparison of the asset state prediction with scheduled maintenance; the determination of changes to the configuration of the electric power system; the determination of a redundancy configuration for the electric power system; without being limited thereto.

The method may further comprise triggering, by the at least one processing system or by the computing system, a control action based on the asset state prediction.

Thereby, the asset state prediction, which is in turn based on the hazard function parameter value determined for the at least one hazard function, is used to trigger the control action. With the hazard function parameter value being determined in a data-driven manner, taking into account at least the outage data, optionally also data indicating maintenance that was performed, control actions can be performed based on an asset state prediction that is improved as compared to conventional approaches. The quality of asset state prediction-based control for the electric power system is improved thereby.

The method further may comprise identifying, based on the asset state prediction over the predictive horizon, maintenance actions to be performed over the predictive horizon, wherein the control action is based on the maintenance actions.

Thereby, the asset state prediction, which is based on the hazard function parameter value determined for the at least one hazard function, is used to trigger a maintenance-related control action. With the hazard function parameter value being determined in a data-driven manner, taking into account at least the outage data, optionally also data indicating maintenance that was performed, maintenance-related control actions can be performed based on an asset state prediction that is improved as compared to conventional approaches. The quality of maintenance-related action for the electric power system is improved thereby.

The control action may comprise a human machine interface (HMI) control action.

Thereby, control actions such as outputting of alerts, warnings, alarms, or other information related to asset degradation in the presence of maintenance may be performed, based on the asset state prediction that is dependent on the hazard function parameter value determined for the at least one hazard function.

Alternatively or additionally, the control action may comprise controlling a data interface to output control data based on the asset state prediction.

Thereby, control actions such as control action acting on devices of a secondary system of the electric power system and/or on primary system equipment of the electric power system may be performed, based on the asset state prediction that is dependent on the hazard function parameter value determined for the at least one hazard function.

Providing or using the hazard function parameter value may comprise maintenance planning.

Thereby, the hazard function that is estimated in a data-driven manner, using at least the outage data, is used in a process that is of particular importance in the context of electric power systems.

Alternatively or additionally, providing or using the hazard function parameter value may comprise identifying an impact of several candidate maintenance scenarios on electric power system reliability and/or availability.

Thereby, the hazard function that is estimated in a data-driven manner, using at least the outage data, is used in a process that is of particular importance in the context of electric power systems.

Alternatively or additionally, providing or using the hazard function parameter value may comprise determining indicators that quantify a prediction uncertainty for asset and/or electric power system predictions, comprising processing the hazard function parameter value in combination with asset and/or electric power system prediction results.

Thereby, the hazard function that is estimated in a data-driven manner, using at least the outage data, is used in a process that is of particular importance in the context of electric power systems.

Alternatively or additionally, providing or using the hazard function parameter value may comprise automatically providing an output comprising a warning, alarm, and/or other information, comprising using the hazard function parameter value to determine whether a trigger criterion for providing the output is fulfilled based on the hazard function parameter value and maintenance schedule data.

Thereby, the hazard function that is estimated in a data-driven manner, using at least the outage data, is used in a process that is of particular importance in the context of electric power systems.

Alternatively or additionally, providing or using the hazard function parameter value may comprise determining an electric power system layout and/or a redundancy configuration of the electric power system.

Thereby, the hazard function that is estimated in a data-driven manner, using at least the outage data, is used in a process that is of particular importance in the context of electric power systems.

The electric power system may comprise at least one of: a power distribution grid; a power transmission grid; a distributed energy resource; a microgrid.

Thereby, the asset state prediction (that is based on the hazard function determined in a manner that is more objective than legacy techniques) is used to improve the asset state prediction in infrastructure systems for which availability and reliability are of particular importance and in which the potential adverse effects of asset failure are potentially catastrophic.

The electric power system may comprise an HVDC transmission grid.

Thereby, the asset state prediction (that is based on the hazard function determined in a manner that is more objective than legacy techniques) is used to improve the asset state prediction in infrastructure systems for which availability and reliability are of particular importance and in which the potential adverse effects of asset failure are potentially catastrophic.

According to an aspect of the invention, there is provided a method of determining at least one maintenance scenario for an electric power system, the method comprising performing the method for an asset state prediction according to an embodiment; and using, by the processing system or the computing system, the hazard function to determine at least one maintenance scenario for the electric power system and to assess an impact of the at least one maintenance scenario on electric power system reliability and availability.

Thereby, the hazard function is used to identify and assess maintenance scenarios. This helps increase system availability and reliability in presence of asset degradation and maintenance.

According to an aspect of the invention, there is provided a method of determining an uncertainty of asset-related diagnostic and/or prognostic information for an asset of an electric power system, the method comprising performing the method for an asset state prediction according to an embodiment; and using, by the processing system or the computing system, the hazard function and diagnostic and/or prognostic information from condition assessments to provide an uncertainty quantification for the condition assessments.

Thereby, the hazard function is used to quantify uncertainties for condition assessment. Thereby, asset degradation and maintenance can be taken into account for quantifying the uncertainties that may stem from, e.g., asset degradation.

According to an aspect of the invention, there is provided a method of automatically generating an output for an electric power system, the output comprising at least one of an alert, alarm, warning, risk level, or other indicator related to an asset of the electronic power system, the method comprising performing the method for an asset state prediction according to an embodiment; and using, by the processing system or the computing system, the hazard function and diagnostic and/or prognostic information as updated during field operation of the asset to determine whether a trigger criterion for generating the output is fulfilled.

Thereby, the hazard function is used to determine when the outputting of an alarm, alert, warning, risk level, or other data related to an asset is to be triggered. Thereby, asset degradation and maintenance can be taken into account for raising an alarm, alert, warning, risk level output, or other data output related to an asset.

According to an aspect of the invention, there is provided a method of determining a system configuration (optionally a redundancy configuration) for an electric power system, the method comprising performing the method for an asset state prediction according to an embodiment; and using, by the processing system or the computing system, the hazard function to determine a system configuration (optionally the redundancy configuration).

Thereby, the hazard function is used to determine which system configuration and/or which redundancy configuration of the electric power system is suitable based on the asset degradation expected based on the hazard function.

According to an aspect of the invention, there is provided machine-readable instruction code which, when executed by at least one processing circuit, causes the at least one processing circuit to perform the method according to an aspect or embodiment of the invention.

The effects attained by the machine-readable instruction code correspond to the effects disclosed in association with the methods and systems according to various embodiments.

According to an aspect of the invention, there is provided non-transitory storage medium having stored thereon machine-readable instruction code which, when executed by at least one processing circuit, causes the at least one processing circuit to perform the method according to an aspect or embodiment of the invention.

The effects attained by the non-transitory storage medium correspond to the effects disclosed in association with the methods and systems according to various embodiments.

According to an aspect, there is provided a processing system for an asset state prediction for an electric power system, the processing system comprising: at least one interface and at least one processing circuit operative to perform a hazard function estimation to estimate a hazard function that is indicative of a probability of asset failure as a function of a variable in absence of asset maintenance, wherein the hazard function has at least one hazard function parameter. The at least one processing circuit is operative such that the hazard function estimation comprises: accessing, via the at least one interface, outage data that comprise information on outages of electric power system assets during field operation in presence of maintenance; and determining a hazard function parameter value for the at least one hazard function parameter, the hazard function parameter value being determined based on the outage data. The at least one processing system is operative to provide or use the hazard function parameter value for the asset state prediction.

Various effects and advantages are attained by the processing system. The processing system is operative to estimate the hazard function parameter value for the at least one hazard function parameter based on the outage data. Thereby, the processing system is operative to determine the hazard function parameter value for the at least one hazard function parameter in a data-driven manner. Thereby, the processing system is operative to provide an estimate for the hazard function that is more objective than one that relies on assumptions and/or human expert imputation regarding the hazard function. Thus, the processing system allows the quality of the asset state prediction to be improved as compared to conventional techniques in which the hazard function is based on assumptions or human expert knowledge, as it is based on a hazard function that is determined in a data-driven manner. Thereby, the processing system is operative to improve the quality of any actions taken based on the asset state prediction, such as the generation and provision of alarms, warnings, or other status information, the verification of maintenance schedules, the determination of a suitable electric power system layout and/or redundancy configurations, the quantification of uncertainties of predictive state assessment, without being limited thereto.

The processing system may be operative such that the hazard function estimation may further comprise a determination of at least one maintenance parameter value that is dependent on the maintenance of the electric power system assets. The processing system may be operative such that the hazard function parameter value is determined based on both the outage data and the at least one maintenance parameter value.

Thereby, the maintenance parameter value(s) (such as parameters of predictive maintenance and/or condition-based maintenance performed in a time interval for which the outage data was obtained) may be used to determine the hazard function parameter value.

Optional features of the processing system according to various embodiments and the effects attained thereby correspond to the optional features and effects discussed in association with the methods according to embodiments.

The processing system may be operative to perform the method according to any aspect or embodiment disclosed herein.

According to another aspect, there is provided a system, comprising an electric power system and the processing system. The electric power system comprises: a primary system comprising assets; a secondary system comprising devices operative to perform control and/or monitoring functions in association with the primary System. The processing system is operative to perform the asset state prediction for at least one of the assets.

Thereby, the asset state prediction (that is based on the hazard function determined in a manner that is more objective than legacy techniques) is used to improve the asset state prediction in infrastructure systems for which availability and reliability are of particular importance and in which the potential adverse effects of asset failure are potentially catastrophic.

Embodiments of the invention provide enhanced techniques for asset state prediction in association with electric power systems for which asset maintenance is of particular importance to ensure availability of the electric power system. Embodiments of the invention are operative to determine parameter value(s) for one or several hazard function parameter(s) of a Weibull function for use in computerized asset maintenance, without being limited thereto.

### BRIEF DESCRIPTION OF THE DRAWINGS

Embodiments of the invention will be described with reference to the drawings in which similar or identical reference signs designate elements with similar or identical configuration and/or function.
Fig. 1 is a schematic representation of a system comprising primary and secondary electric power system equipment and a processing system.
Fig. 2 is a schematic block diagram representation of a processing system.
Fig. 3 is a flow chart of a method for asset state prediction.
Fig. 4 is a flow chart of a method for asset state prediction.
Fig. 5 is a flow chart of a method for asset state prediction.
Fig. 6 is a schematic representation to illustrate operation of a processing system and method for asset state prediction.
Fig. 7 is a flow chart of a process useful in the methods of Fig. 3, Fig. 4, and Fig. 5.
Fig. 8 is a schematic representation of a system comprising the processing system.
Fig. 9 is a schematic representation of a system comprising the processing system.
Fig. 10 is a flow chart of a method of using the hazard function.
Fig. 11 is a schematic representation of a system comprising the processing system.
Fig. 12 is a flow chart of a method of using the hazard function.
Fig. 13 is a schematic representation of a system comprising the processing system.
Fig. 14 is a flow chart of a method of using the hazard function.
Fig. 15 is a schematic representation of a system comprising the processing system.
Fig. 16 is a flow chart of a method of using the hazard function.

### DETAILED DESCRIPTION OF EMBODIMENTS

Embodiments of the invention will be described with reference to the drawings. In the drawings, similar or identical reference signs designate elements with similar or identical configuration and/or function.

As used herein, the term "electric power system" encompasses power distribution systems, power generation systems, and/or a power transmission systems, as well as substations of such systems.

As used herein, the term "asset" encompasses assets of a primary system of the electric power system, such as transformers (e.g., power transformers), HVDC valves (e.g., thyristor valves and/or insulated gate bipolar transistor (IGBT) valves), converters/inverters, without being limited thereto.

As used herein, the term "hazard function" refers to a function that defines a likelihood of failure or other degradation of an asset as a function of a variable (typically time) in the absence of maintenance of the asset. The hazard function has one or several hazard function parameters. The techniques disclosed herein are operative to determine a hazard function parameter value for at least one of the hazard function parameters (such as the value of a scale parameter of a Weibull function and/or the value of a shape parameter of the Weibull function), based on outage data collected for electric power system assets in field operation over a historical time interval. Alternatively or additionally, the techniques disclosed herein may be operative to determine the hazard function parameter value for several hazard function parameters (that may include a scale parameter and/or a shape parameter of a Weibull function, without being limited thereto). The techniques disclosed herein are in particular operative to determine the hazard function parameter value based on the outage data, taking into consideration that maintenance was performed for these electric power system assets during field operation. The hazard function, with the at least one hazard function parameter value(s) determined using the method(s) and/or system(s) disclosed herein, may be used for computerized asset maintenance.

As used herein, the term "hazard function parameter" encompasses a scale parameter of a Weibull function, e.g., the parameter β of the Weibull function, and/or a shape parameter of the Weibull function. The at least one parameter value for the hazard function parameter may, thus, be a value of the scale parameter of the Weibull function and/or of the shape parameter of the Weibull function.

As used herein, "computerized asset maintenance" encompasses the determination of asset maintenance operations, in particular of a maintenance schedule, using the hazard function, and/or predictive monitoring of the electric power system using the hazard function. The risk of outages can be reduced by implementing the computerized asset maintenance, and the quality of the computerized asset maintenance is enhanced by estimating the hazard function from outage data obtained for electric power system assets over past time periods in which maintenance was performed on the electric power system assets.

As used herein, "predictive maintenance" (PM) refers to a process that is operative to predict at what point(s) in time maintenance is to be performed. Predictive maintenance may involve monitoring and analyzing the condition of equipment to predict when maintenance or repairs will be needed in order to avoid unexpected breakdowns or failures. Predictive maintenance may be performed based on data (such as measurements and/or even-triggered messages) obtainable from or obtained from a secondary system of the electric power system, sensors, and predictive modeling that can detect early signs of potential problems or malfunctions. By proactively addressing issues before they escalate, predictive maintenance helps to increase the reliability, efficiency, and lifespan of the equipment, while also reducing downtime and maintenance costs.

As used herein, "condition-based maintenance" (CBM) refers to a process that is operative to determine whether an asset is in a state at which maintenance is to be performed. Condition-based monitoring may provide information when an unacceptable state is reached, and action needs to be taken in the present moment to avoid failure.

As used herein, "asset state" encompasses an asset state as indicated by a discrete state space, such as a discrete state space comprising two, three, or more states (such as "normal," "incipient," "degraded," "failed"). Thus, an asset state prediction may comprise a prediction of probabilities for an asset to be in either one of the various states of the discrete state space. Techniques that utilize such a state space are discussed in, e.g., EP 3 923 214 A1, EP 3 923 213 A1, and EP 3 923 101 A1.

As used herein, an "asset state prediction" encompasses the predictive determination of a time evolution of probabilities for an asset to be in either one of the various states of the discrete state space, the determination of a remaining useful life (RUL), or the determination of other quantities related to asset degradation.

As used herein, a "repairable system simulation" refers to a stochastic process used to model both degradation and repair of an asset. The repairable system simulation may be or may comprise a general renewal process.

As used herein, a "general renewal process" (GRP) (which is also sometimes referred to as generalized renewal process) refers to a stochastic process used to model failure/repair behavior of repairable systems. A GRP may be performed using, e.g., the techniques of M. Yañez et al., "Generalized renewal process for analysis of repairable systems with limited failure experience". Reliability Engineering & System Safety. 77 (2): 167-180. doi:10.1016/S0951-8320(02)00044-3; and/or the techniques of W. Kahle et al., "Modeling the Influence of Maintenance Actions". Mathematical and Statistical Methods in Reliability. Series on Quality, Reliability and Engineering Statistics. 7: 387-399. doi:10.1142/9789812795250_0025. ISBN 978-981-238-321-1. Volume 77, Issue 2, 1 August 2002, Pages 167-180.

As used herein, "outage data" refers to data relating to electric power system outages. The outage data may comprise data on outages of at least one electric power system asset, optionally on outages of several electric power system assets, as observed during field operation. The outage data may have any one of various formats, such as by specifying one, several, or all of: occurrences of outages; rates of occurrences of outages; start and end times for each of several outages; durations of each of several outages. The outage data may include this information in a time-resolved manner. The outage data may comprise outage data collected for the electric power system for which the asset state prediction is to be performed, during field operation of that system. The outage data may alternatively or additionally comprise outage data collected for at least one other electric power system different from the electric power system for which the asset state prediction is to be performed, during field operation of that system.

As used herein, a "maintenance parameter value" refers to a parameter value related to a maintenance process. The maintenance parameter value may comprise or may be a parameter value of a CBM or PM process parameter. The maintenance parameter value may comprise any one or any combination of: occurrences of maintenance activities; rates of occurrence of maintenance activities. The maintenance parameter value may be determined by accessing a storage system having stored therein one or several record(s) of maintenance activities that have taken place, and/or by using a modelling approach under the assumption that the electric power system operator used a reasonable or even (close to) optimum maintenance process over a historical time period for which outage data are available. The maintenance parameter value may comprise or may be the parameter value of at least one parameter of the repairable system simulation to reflect the repair that has taken place.

As used herein, the term "determination" or "determine" encompasses an approximate determination.

Methods and processing systems according to embodiments are operative to apply repairable system modelling (e.g., the GRP technique) to take into consideration an effect of maintenance on asset failure in such a manner that the results of the repairable system modelling over a historical time interval reproduce reported outages as specified by the outage data. Thereby, the underlying intrinsic failure distribution as reflected by the hazard function (that specifies failure in the absence of maintenance) is determined based on real-life field operation of electric power system(s) in which outages occur in presence of maintenance.

The hazard function is used in the methods and processing systems. This may be done in various ways and for various purposes, e.g., to model alternative maintenance scenarios, such as applying time-based maintenance at different intervals, evaluating effects of CBM, or otherwise.

Thus, the processing system and method are operative to determine the hazard function, which quantifies the risk of asset failure in the absence of maintenance, based on outage data that is collected during field operation, with maintenance being performed on assets in the course of that field operation for which the outage data is obtained. The effect of the maintenance is taken into consideration by the processing system and methods when determining a hazard function parameter value for the at least one hazard function parameter. In other words, the processing system and method provides the effect of taking into consideration maintenance performed on an electric power system for which the outage data was collected, to thereby determine the hazard function which quantifies the risk of asset failure in the absence of maintenance.

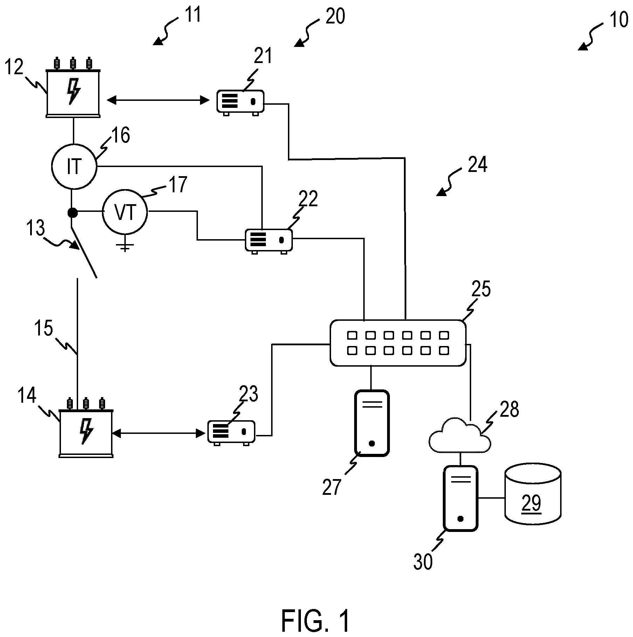

Fig. 1 shows a schematic representation of a system 10. The system 10 comprises an electric power system comprising a primary system 11 and a secondary system 20. The secondary system 20 comprises a plurality of intelligent electronic devices (lEDs) 21, 22, 23 that each perform control and/or monitoring functions for primary system equipment of the primary system 11. The primary system 10 comprises assets, such as power transformers 12, 14. The power transformers 12, 14 are connected to a line 15, which may be a power transmission line or a power distribution line. At least some of the lEDs 21 22, 23 may be interfaced with measurement instrumentation, such as a current transformer 16 and/or a voltage transformer 17. At least some of the lEDs 21, 22, 23 may be operative to operate primary system equipment, such as a circuit breaker (CB), power switch, and/or other switchgear 13. The lEDs 21, 22, 22 may be communicatively coupled with each other via a communication system 24. The communication system 24 may comprise a gateway device 25, such as a communication switch.

The system 10 may comprise an asset maintenance system 27 operative to perform computerized asset maintenance. The asset maintenance system 27 is operative to perform the computerized asset maintenance using a hazard function. The hazard function that defines the risk of fault of an asset (such as of transformer 12 or a transformer 14) as a function of a variable, in particular as a function of time. The asset maintenance system 27 is operative to evaluate the hazard function as a function of time to determine, for example, maintenance schedule or to perform a predictive monitoring for the electric power system, taking into consideration the risk of asset failure as quantified by the hazard function.

The system 10 comprises a processing system 30 operative to determine parameter values for one or several parameters of the hazard function. The processing system 30 is operative to determine the parameter values for one or several parameters of the hazard function in a data-driven manner, and, more specifically, based on outage data collected for electric power system assets during field operation in the presence of maintenance. The processing system 30 is operative to take into account that maintenance was performed on the electric power system assets to which the outage data relates. In a specific and advantageous implementation, the hazard function may be a Weibull function. The processing system 30 may be operative to determine at least the parameter value of a scale parameter of the Weibull function.

The processing system 30 may be communicatively interfaced with the asset maintenance system 27 via a wide area network (WAN) 20 or the internet. The processing system 30 may be operative to provide the determined parameter values of the one or several parameters of the hazard function, as determined by the processing system 30, to the asset maintenance system 27 for use in computerized asset maintenance.

The processing system 30 may comprise or may be communicatively interfaced with a data repository 29 that comprises outage data relating to outages of electric power system assets observed and reported over a historical time interval that precedes the determination of the parameter values of the one or several parameters of the hazard function.

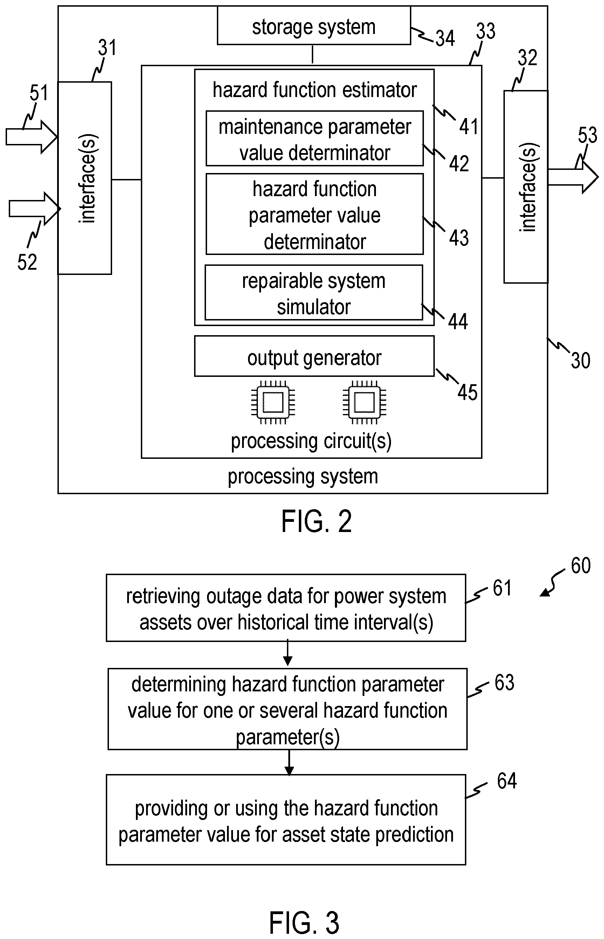

Fig. 2 is a schematic block diagram representation of the processing system 30. The processing system comprises at least one interface 31, 32. The at least one interface of the 31, 32 comprises a data interface 31 operative to receive outage data 51. The outage data 51 is representative of outages (in particular failures) of electric power system assets as observed during field operation of the electric power system assets.

The processing system 30 comprises at least one processing circuit 33 operative to process the outage data 51 to determine one or several parameter values for one or several parameters of the hazard function. Thus, the processing system 30 is operative to estimate the hazard function, which specifies the degradation of an asset as a function of a variable (such as time) in the absence of maintenance, based on outage data collected for electric power system assets for which maintenance is performed during the field operation. To determine the hazard function, the at least one processing circuit 33 is operative to implement a hazard function estimator 41.

The hazard function estimator 41 is operative to determine and provide a parameter value of at least one parameter of the hazard function, based on the outage data 51. The scale parameter of the Weibull function is an example for such a hazard function parameter.

The hazard function estimator 41 generally comprises a maintenance parameter value determinator 42. The maintenance parameter value determinator 42 is operative to determine at least one maintenance parameter value, such as a parameter value of a CBM or PM process. Preventive maintenance may be described by a renewal process that adjusts the virtual life of an asset due to maintenance actions causing a partial restoration or replacement of parts (general renewal process). Condition-based maintenance parameters may be defined as thresholds for consumed or remaining useful life that trigger preventive maintenance actions during an online or offline inspections.

The maintenance parameter value determinator 42 may be operative to determine the at least one maintenance parameter value based on available maintenance data 52, wherein the maintenance data 52 specifies maintenance performed on the electric power system assets to which the outage data 51 relates. Alternatively or additionally, the processing system 30 may be operative to estimate the maintenance parameter value, e.g., the CBM parameter value and/or PM parameter value, even in cases in which no information on the performed maintenance is available, e.g., when no information is available on the frequency and/or schedule of the maintenance performed on the electric power system assets to which the outage data relates.

The hazard function estimator 41 comprises a repairable system simulator 44. The repairable system simulator 44 may be operative to simulate a stochastic degradation and repair process, e.g., a GRP, for the asset. The repairable system simulator 43 may be operative such that the repairable system simulation is performed based on the maintenance parameter value determined by the maintenance parameter value determination 42. The repairable system simulator 43 may be operative such that the repairable system simulation is performed independently of the outage data 51. The processing system 30 may be operative such that the repairable system simulator 43 is invoked multiple times in an iterative process, to determine the parameter value or parameter values of the one or several hazard function parameters that are to be determined. The processing system 30 may be operative to compare a result of the repairable system simulation performed by the repairable system simulator 43 with the available outage data 51 to determine whether the repairable system simulation is consistent with the outages as reported in the outage data 51.

A hazard function parameter value determinator 43 may be operative to invoke the repairable system simulator 44 multiple times. The hazard function parameter value determinator 43 may be operative to record, for each of several candidate hazard function parameter values (e.g., each of several candidate Weibull scale parameter values), a metric that quantifies the deviation of the repairable system simulation results from the outage data. The hazard function parameter value determinator 43 may be operative to identify, from the several candidate hazard function parameter values, a hazard function parameter value for which the repairable system simulation results most closely represent the outage data (e.g., in the sense that they cause a distance metric to become minimum). The hazard function parameter value determinator 43 may be operative to continue invoking the repairable system simulator 44 until a hazard function parameter value has been identified for which the repairable system simulation results represent the outage data sufficiently closely (e.g., in the sense that they cause a distance metric to fulfil a threshold criterion) or until a different termination criterion has been fulfilled.

The processing system 30 may comprise an output generator 45. The output generator 45 may comprise an interface controller to control at least one interface 31, 32 to output the hazard function parameter value 53 and/or data or control commands that are based thereon.

The processing system 30 or a computerized asset maintenance system different from the processing system 30 may be operative to perform computerized asset maintenance based on the hazard function parameter value 53.

For illustration, the processing system 30 or the computerized asset maintenance system 27 may be operative to use the hazard function parameter value 53 determined in a data-driven manner based on the outage data 51 to perform one, several, or all of the following: determining a maintenance schedule; performing an interface control operation based on a determine maintenance schedule; performing a predictive asset monitoring over a predictive time horizon; performing a further interface control operation based on a predictive asset monitoring over a predictive time horizon; outputting control data to trigger a change in a primary system component of the primary system 11 of the electric power system; outputting control data to establish a communicative link for causing workforce deployment to perform maintenance.

The processing system 30 comprises a storage system 34. The storage system 34 is operative to store the outage data 51 and, if available, maintenance data 52 therein. The storage system 34 may be operative to store machine-readable instruction code which, upon execution by at least one processing circuit 33, causes the processing system 30 to perform the method of an embodiment.

To perform the mentioned operations, the at least one processing circuit 30 may comprise any one or any combination of integrated circuits, integrated semiconductor circuits, processors, controllers, graphics processing units (GPUs), tensor processing units (TPUs), central processing units (CPUs), application specific integrated circuits (ASICs), field programmable gate arrays (FPGAs), circuit(s) including quantum bits (qubits) and/or quantum gates, without being limited thereto.

Fig. 3 is a flow chart of a method 60. The method 60 may be performed automatically by the processing system 30.

At process block 61, outage data is retrieved. The outage data comprises information (such as a time and/or rate of occurrence) on outages recorded during field operation of the electric power system assets. The outage data relates to outages (such as failures) during field operation over a historical time interval or several historical time intervals. The outage data comprises, or may consist of, data on outages of electric power system assets different from (but having a same as a type as) the asset for which the hazard function is used in performing computerized asset maintenance.

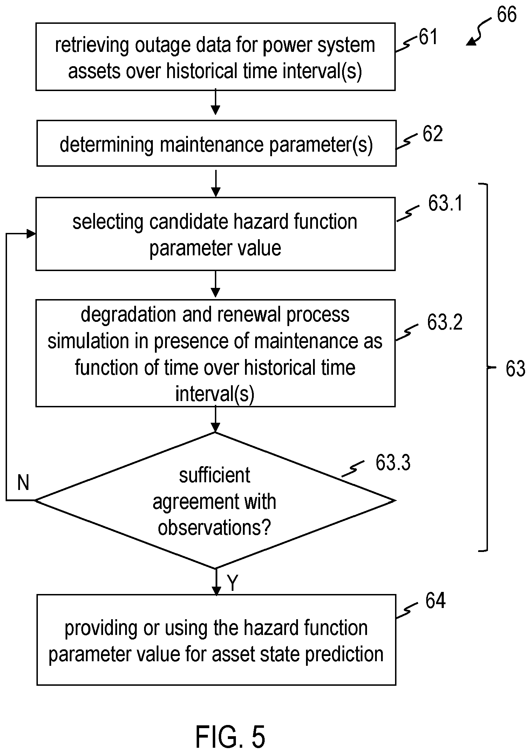

At process block 63, a hazard parameter function value for at least one hazard function parameter is determined based on the outage data. The hazard parameter function value may be determined such that a repairable system simulation for the asset, as performed using the hazard parameter function value to simulate asset degradation in the presence of maintenance, reproduces the outage data obtained during field operation such that, e.g., a quality criterion (e.g., a threshold criterion) is fulfilled. The repairable system simulation may comprise a stochastic simulation. The stochastic simulation may simulate, e.g., the degradation and renewal of one or several electric power system assets as a function of time for the historical time interval(s) to which the outage data relate. The stochastic simulation may comprise a Monte Carlo simulation, without being limited thereto. Process block 63 may comprise a comparison of the simulation results are compared with the observations, i.e., the outage data. Process block 63 may comprise an iterative process in which a candidate hazard function parameter value is set and, depending on a comparison of the simulation results with the outage data, modified to thereby prove the consistency of the simulation results with the observations, i.e., the outage data, as will be explained in more detail with reference to Fig. 5.

At process block 64, the hazard function parameter value for the at least one hazard function parameter (e.g., for the scale parameter of the Weibull function) is used by the processing system and/or by a computing system separate from the processing system. Process block 64 may have various implementation, such as one, several, or all of the following: determining a maintenance schedule; performing an interface control operation based on a determine maintenance schedule; performing a predictive asset monitoring over a predictive time horizon; performing a further interface control operation based on a predictive asset monitoring over a predictive time horizon; outputting control data to trigger a change in a primary system component of the primary system 11 of the electric power system; outputting control data to establish a communicative link for causing workforce deployment to perform maintenance.

Process block 64 may comprise generating output based on the hazard function parameter value for the at least one hazard function parameter, which were determined to result in simulation results that are consistent with the observations, i.e., outage data. Generating the output may comprise performing an interface control operation to provide the hazard function parameter value or other output data dependent thereon for use in a computerized asset monitoring process.

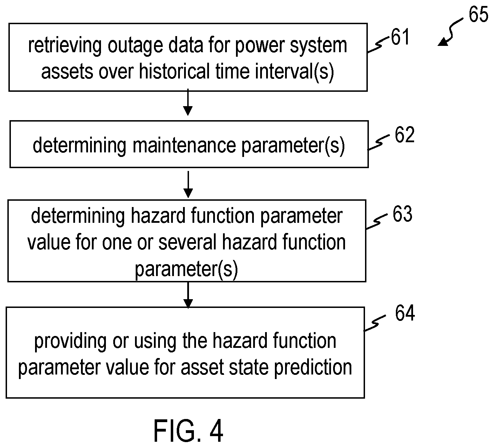

Fig. 4 is a flow chart of a process 65. The process 65 may be performed automatically by or using the processing system 30 or the system 10 comprising the processing system 30 as well as primary and secondary electric power system equipment.

Process block 61 may be implemented as described with reference to Fig. 3.

At process block 62, one or several maintenance parameter values are determined which is/are indicative of maintenance performed for the electric power system assets to which the outage data relate. The maintenance parameter(s) may comprise CBM parameter(s) and/or PM parameter(s). The determination of the one or several maintenance parameter values may be implemented in a data-driven manner, e.g., based on information on the maintenance schedule that may be available. Alternatively or additionally, the determination of the one or several maintenance parameter values may be performed based on the assumption that maintenance was performed for the electric power system assets with a maintenance schedule that complies with prespecified quality criteria. Thereby, the determination of the one or several maintenance parameter values may be performed even when no information on the maintenance is available for the historical time interval(s) to which the outage data relate.

At process block 63, a hazard parameter function value for at least one hazard function parameter is determined based on the outage data and based on the maintenance parameter value(s), e.g., the parameter value(s) of the CBM or PM process. The determination of the hazard parameter function value may be performed as previously explained with reference to Fig. 3.

Process block 64 may be implemented as described with reference to Fig. 3.

Fig. 5 is a flow chart of a process 66. The process 66 may be performed automatically by or using the processing system 30 or the system 10 comprising the processing system 30 as well as primary and secondary electric power system equipment.

Process blocks 61 and 62 may be performed as explained with reference to Fig. 3 and Fig. 4.

The process 66 comprises a determination of the hazard function parameter value that comprises an iterative process comprising a plurality of iterations. The iterative process is operative to identify the hazard function parameter value that provides a good consistency of the repairable system simulations and the outage data, i.e., observations. Each of the iterations may comprise at least the following process blocks:
At process block 63.1, a candidate hazard function parameter value is set. In the initial iteration, the candidate hazard function parameter value is initialized thereby. The initialization of the candidate hazard function parameter value may comprise hard imputation, i.e., setting the candidate hazard function parameter value to a default value. In subsequent iterations, the candidate hazard function parameter value may be set at process block 63.1 based on the candidate hazard function parameter value used in at least one preceding iteration (e.g., the immediately preceding iteration) and the discrepancy between the repairable system simulation results and the outage data.

At process block 63.2, the repairable system simulation is performed to simulate degradation and repair of the asset as a function of time over the historical time interval or over the historical time intervals. The repairable system simulation may comprise a stochastic simulation to simulate asset degradation and renewal. A Monte Carlo technique may be used to this end. The repairable system simulation may comprise determining a likelihood of an outage, in particular of a failure, of the respective asset.

At process block 63.3, the repairable system simulation results are compared to the outage data. The comparison may comprise determining a modulus of a deviation of the repairable system simulation results from the outage data. For repairable system simulation results determined as timeseries data, a suitable metric (such as a L₂ norm or another L_{N} norm over the historical time interval(s)) may be used to quantify the discrepancy between the simulation results and the observations, i.e., the outage data. The comparison at process block 63.3 may comprise a threshold comparison of the deviation of the repairable system simulation results and the outage data.

Any one of various metrics can be used to quantify the discrepancy between the simulation results and the observations, i.e., the outage data. Examples include:
There are several metrics that can be used to quantify the discrepancy between simulation results and observations over a time interval. Some common metrics include:
- Mean Absolute Error (MAE): The MAE is calculated as the average of the absolute differences between simulated values and observed values over the time interval. It provides a simple measure of the average magnitude of errors between the simulation and observations.
- Root Mean Square Error (RMSE): The RMSE is a measure of the differences between the simulated and observed values, taking into account the square of the errors. It provides a more comprehensive measure of the errors and penalizes larger errors more heavily compared to the MAE.
- Mean Squared Error (MSE): The MSE is calculated as the average of the squared differences between simulated values and observed values over the time interval. It provides a measure of the overall variance of errors between the simulation and observations.
- Normalized Root Mean Square Error (NRMSE): The NRMSE is calculated by normalizing the RMSE with the range of the observed values. It provides a relative measure of the error compared to the variability of the observed values.
- Coefficient of Determination (R-squared): R-squared measures the proportion of the variance in the observed values that can be explained by the simulated values. It provides a measure of the goodness-of-fit of the simulation model to the observations.

These metrics can help assess the accuracy and reliability of the repairable system simulation, as obtained for the respective candidate hazard function parameter value, by quantifying the level of agreement or discrepancy between simulated results and observed data over a specific time interval.

Depending on a result of the comparison at process block 63.3, the method can proceed to process block 63.1 if it is determined that the repairable system simulation results to not yet adequately represent the outage data. In the subsequent iteration, the candidate hazard function parameter value may be set at process block 63.1 based on the previous candidate hazard function parameter value, e.g., by incrementing or decriminalizing the candidate hazard function parameter value.

If it is determined that the repairable system simulation results are consistent with the outage data, the method proceeds to process block 64. Process block 64 may be implemented as previously described with reference to Fig. 3.

Thus, as is evident from the description of Fig. 3, Fig. 4, and Fig. 5, the techniques disclosed herein are operative to estimate the hazard function for an asset type, which quantifies the likelihood of asset failure as a function of time in the absence of maintenance, in a data-driven manner based on outage data that relates to assets for which maintenance was performed. Thereby, the hazard function can be determined in an objective, data-driven manner, which improves reliability and quality of the computerized asset maintenance that uses the hazard function.

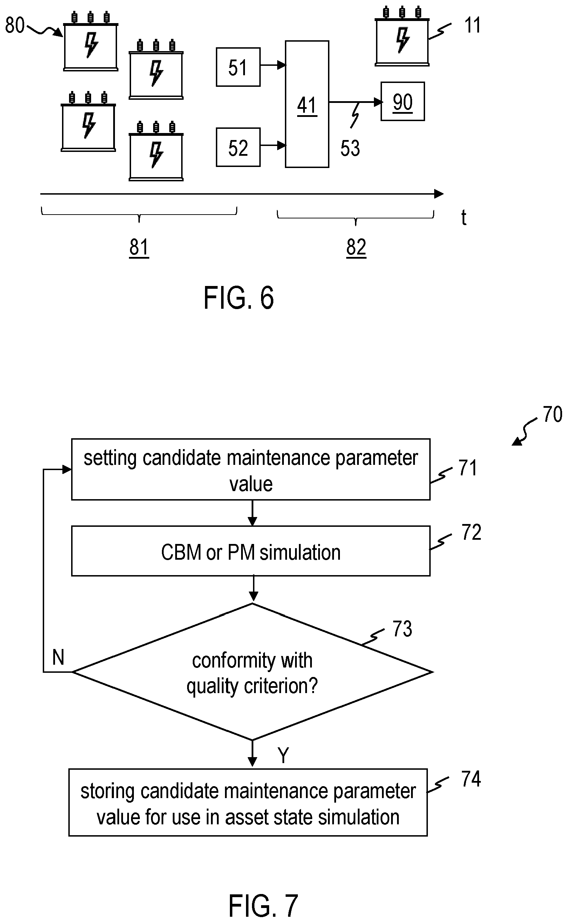

Fig. 6 is a schematic representation to illustrate operation of the methods and/or processing systems disclosed herein. Outage data 51 is available based on observations (such as reports) collected for a plurality of electric power system assets 80 over at least one historical time interval 81. The hazard function estimator 41 processes the outage data 51 to determine the hazard function parameter value 53. If available, maintenance data 52 relating to maintenance performed on the plurality of electric power system assets 80 over the at least one historical time interval 81 may be processed by the hazard function estimator 41. If not available or if incomplete, the hazard function estimation 44 may estimate parameter values related to maintenance, such as CBM and/or PM parameter values.

A computerized asset maintenance system 90 may be operative to use the determined hazard function parameter value(s) 53. The computerized asset maintenance system 90 may use the hazard function parameter value(s) 53 in various ways, such as any one or any combination of the following: determining an asset maintenance schedule for the asset 11 over a predictive time horizon 82 later than all of the historical time intervals 81; performing a control operation based on the determined asset maintenance schedule; performing predictive electric power system monitoring over the predictive time horizon 82 over a predictive time horizon 82 later than all of the historical time intervals 81; performing a control operation based on the determined predictive electric power system monitoring.

The determination of maintenance parameter values at process block 62 may, but does not need to be based on maintenance data that represent a record of actual maintenance activities. Not all maintenance data may be available, or no maintenance data may be available at all for the assets to which the outage data relates. In such cases, the processing system 30 and, in particular, the hazard function estimator 41, may be operative to determine at least one maintenance parameter value. The at least one maintenance parameter value may comprise a value of a CBM or PM process.
Fig. 7 is a flow chart of a process 70. The process 70 may be performed automatically by the processing system 30 or the system 10 comprising the processing system 30 as well as primary and secondary electric power system equipment. The process 70 may be performed to determine the maintenance parameter values for use in simulating asset degradation at process block 62 of Fig. 4 or Fig. 5.

The process 70 comprises an iterative process 71-103 to estimate the maintenance parameter values, such as the CBM or PM parameter values.

At process block 71, a candidate CBM or PM parameter value is set. In the initial iteration, the candidate CBM or PM parameter value is initialized thereby. The initialization of the candidate CBM or PM parameter value may comprise hard imputation, i.e., setting the candidate CBM or PM parameter value to a default CBM or PM parameter value. In subsequent iterations, the candidate CBM or PM parameter value may be set at process block 71 based on the candidate CBM or PM parameter value used in at least one preceding iteration (e.g., the immediately preceding iteration) and an evaluation of the maintenance, which is performed at process block 73.

At process block 72, a CBM or PM simulation is performed based on the candidate CBM or PM parameter value.

At process block 73, the result of the CBM or PM simulation is evaluated to assess whether the maintenance, if performed using this CBM or PM parameter value, results in a desired quality of electric power system operation. If this is not the case, process blocks 71-103 are repeated. Otherwise, the process 70 proceeds to process block 74.

At process block 74, the candidate maintenance parameter value determined to result in CBM or PM simulation results that comply with the quality criterion is stored for use in simulating asset degradation in the presence of maintenance, to thereby determine the hazard function that indicates the likelihood of asset degradation in the absence of maintenance.

The methods may comprise additional steps, such as Failure Mode and Criticality Analysis (FMEA), in which key components and failure modes of the asset are identified. For illustration, a method and process may include:
- Partitioning assets into key components and failure modes by FMEA.
- Fitting field data, maintenance actions, and resources (spares, crew, cost) to failure. This may comprise: collecting outage data, distributing outages to components and failure modes, applying maintenance actions by GRP, and fitting results of GRP simulations to outage data.
- Defining power station system-level configuration by translating the single line diagram to a reliability block diagram (RBD).
- Analyzing system outcomes and component criticality by applying Monte Carlo Simulation (discrete event simulation).
- Optimizing maintenance policies by applying what-if analyses, e.g., based on principles of reliability-centered maintenance (RCM)).
- Updating hazard function parameters from operation & maintenance information (reliability twin)
- Probabilistic uncertainty analysis and uncertainty propagation by parameter variations.
- Optionally using availability and life cycle cost outcomes to ensure reliability.

The third to eights steps in the above list are optional. Not all of these steps need to be performed, but the steps can be performed in the method according to an embodiment.

The hazard function and, in particular, the hazard function parameter value for at least one hazard function parameter is/are determined in a data-driven manner. This may comprise determining the hazard function and maintenance restoration parameters for a given failure mode of the FMEA. Given an observed rate of occurrence of failures (outage rate) of a failure mode, the methods and processing system are operative to derive the underlying hazard function distribution parameters (e.g., Weibull shape and scale parameter) that lead to the observed outages under given maintenance actions.

The methods and processing system may be operative to implement this by setting a target for the expected "maintenance effectiveness," which can be defined as a ratio of a number of prevented failures or replacements in relation to a number of all replacements (prevented and forced failures). This is a figure that is sometimes available from publications, but generally should be available from historical data from transmission system operators (TSOs) and/or distribution system operators (DSOs). When this target is given, the maintenance modelling parameters (such as CBM trigger thresholds, PM restoration factors) are set and varied to get the target maintenance effectiveness.

The methods and processing system may be operative to then vary the hazard function Weibull scale and/or shape parameter until the reported outage rate is achieved. If individual time-to-failure life data is available for an asset, then the hazard function dispersion parameter, e.g., Weibull scale and/or shape parameter (e.g., the Weibull ß parameter), can be determined by statistical life data analysis (Weibull analysis). Otherwise, a generic hazard function Weibull shape parameter of ß= 2.5 can be used.

The method and processing system may be operative to implement a technique that comprises: (1) representing assets down to failure modes and spare parts: (2) modelling maintenance by the GRP accounting for time and effect of maintenance actions; (3) arranging assets in an RBD representing its system configuration including redundancy of assets; and (4) conducting probabilistic Monte Carlo simulation to extract all system outcomes of interest in histograms (across sufficient iterations and life span) provides a an efficient technique that is particularly advantageous when applies for assets of electric power systems.

The processing system and method may be operative to determine both the hazard function parameter value(s) (e.g., the Weibull shape and/or size parameters) that define the hazard function distribution and the at least one maintenance parameter values. The processing system and method may be operative to store these parameter values in an asset data repository that may be maintained in the storage system 34 or separately therefrom.

To perform a system analysis, the processing system 30 or a computing system separate therefrom may translate a system representation of the electric power system from its SLD into an RBD representation. The processing system 30 or the computing system separate therefrom may retrieve the hazard function parameter value(s) and, optionally, other modelling parameters for use in electric power system simulation, monitoring, and/or control.

The processing system 30 or the computing system may perform a discrete event simulation by applying a Monte Carlo method. The maintenance parameters such as scheduling intervals can be varied to investigate the effect on system outcome and the best scenario can be chosen. These operations provide a use of the hazard function parameter value(s) for improving maintenance. Alternatively or additionally, to assess the effects of condition monitoring infrastructure, CBM actions can be added to the existing ones and the overall life cycle cost can be compared.

The hazard function parameter value(s) may be updated when new data is available. This update can be performed by the processing system 30 or the computing system on an ongoing basis (i.e., continually), automatically, or responsive to a request, e.g., when an analysis is to be performed. This is particularly useful for maintaining a reliability twin.

Various update techniques may be used, such as:
- Operation time and duty cycle: Updating the location parameter (e.g., Weibull scale parameter) by a correction factor representing the conditional reliability.
- Failed items: Setting a (redundant) block as failed.
- Damage accumulation/mission profile analysis: If a load or stress monitoring together with a life-stress relationship/acceleration factor is available, then the consumed life can be calculated, and the Weibull scale parameter η_{ref} can be adjusted by an effective acceleration factor.

- Prognostics: The estimated remaining useful life (RUL) and uncertainty of the RUL, ΔRUL, from a prognostics engine are used to update the hazard function.
- Damage propagation: A critical device parameter S can be trended against a threshold, e.g., by using a power law for damage propagation; the estimated RUL and ΔRUL may then be used for determining an updated hazard function.

The hazard function and, in particular, the hazard function parameter value(s) may be used in various ways. In particular, the hazard function estimated by the processing system 30 may be used by a computerized asset maintenance system 90. The computerized asset maintenance system 90 may be comprised by the processing system 30 or by a computing system separate from the processing system 30.

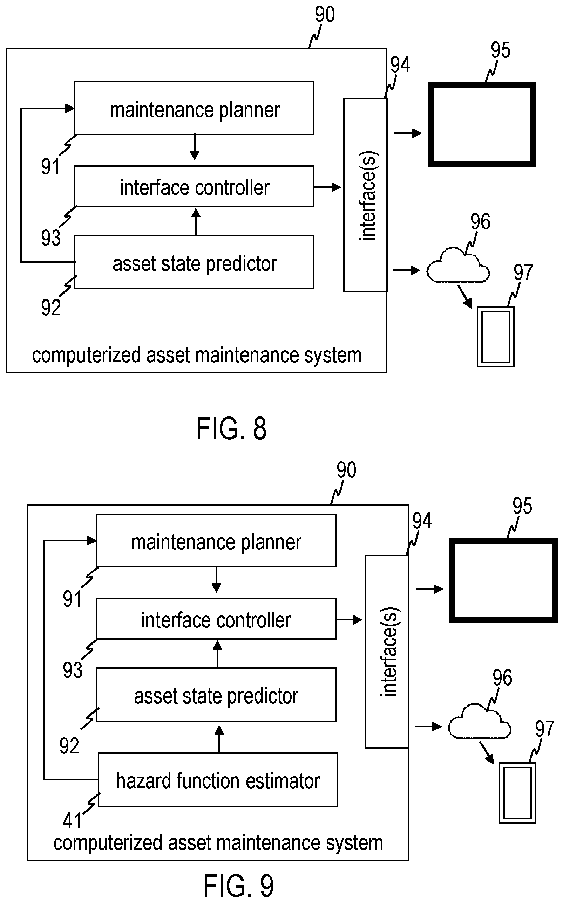

Fig. 8 is a block diagram representation of the computerized asset maintenance system 90. The computerized asset maintenance system 90 may comprise a maintenance planner 91 operative to perform maintenance planning based on the hazard function and/or an asset state prediction of the electric power system. The asset state prediction may be performed by an asset state predictor 92, using, e.g., Monte Carlo techniques. The asset state predictor may be operative to perform the asset state prediction using the hazard function estimated using the techniques disclosed herein. The maintenance planning and/or the asset state prediction may comprise simulations, e.g., stochastic model simulations, that are performed using the hazard function. Responsive to the maintenance planning and/or the predictive monitoring, an interface controller 93 may control at least one interface 94. The interface controller may be operative to control at least one interface 94 based on a result of the maintenance planning and/or the predictive monitoring, which in turn is dependent on the hazard function parameter value. The computerized asset maintenance system 90 may be operative to control the at least one interface 94 to generate output via a human machine interface 95 and/or to establish a communication link with a communication terminal 97 for work force deployment to initiate maintenance. The communication link to the communication terminal 97 may be established over a communication network 96, which may comprise a cellular network and/or a WAN and/or the internet.

Fig. 9 is a block diagram representation of the computerized asset maintenance system 90. The computerized asset maintenance system 90 comprises the hazard function estimator 41, which is operative to determine the hazard function parameter value for at least one hazard function parameter (e.g., the Weibull function shape and/or scale parameter). The asset state predictor 92 and/or the maintenance planner 91 are operative to use the hazard function parameter value for at least one hazard function parameter when performing their processing operations.

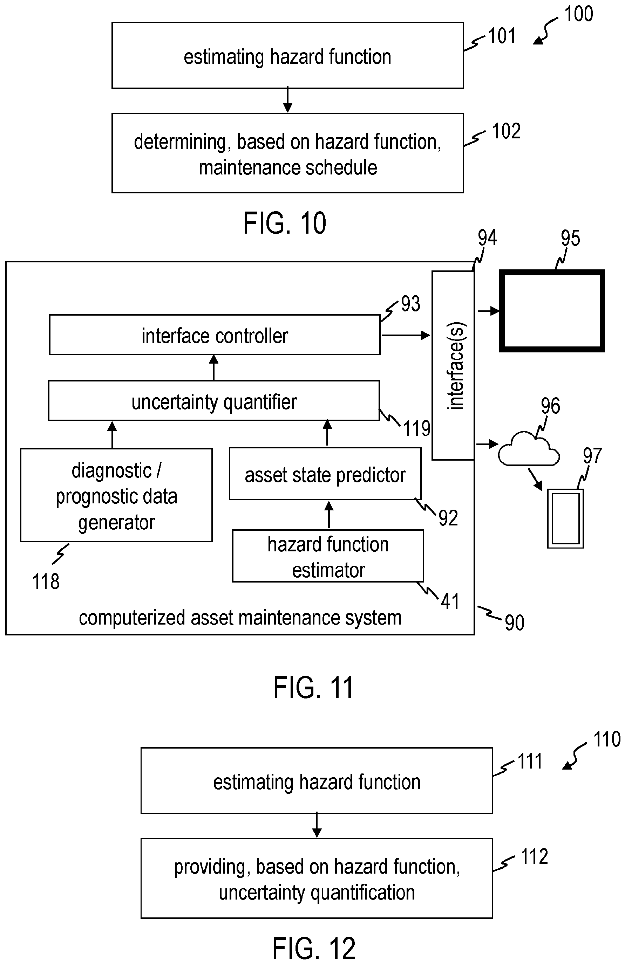

Fig. 10 is a flow chart of a method 100 of determining at least one maintenance scenario for an electric power system. The method 100 may be performed automatically by the processing system 30 or by a system comprising the processing system 30.

At process block 101, the hazard function for an asset is estimated, based on outage data. Process block 101 may be implemented as described in detail with reference to Fig. 1 to Fig. 7.

At process block 102, the processing system or a computing system different from the processing system uses the hazard function to determine at least one maintenance scenario for the electric power system. Process block 103 may further comprise assessing an impact of the at least one maintenance scenario on electric power system reliability and availability.

Thereby, the hazard function is used to identify and assess maintenance scenarios. This helps increase system availability and reliability in presence of asset degradation and maintenance.

Fig. 11 is a block diagram of a computerized asset maintenance system 90. The computerized asset maintenance system 90 comprises the hazard function estimator 41 and the asset state predictor 92, which may be operative as previously described herein. The computerized asset maintenance system 90 further comprises a generator 118 operative to generate diagnostic and/or prognostic data related to an asset. The generator 118 may be operative to determine a RUL for the asset. The computerized asset maintenance system 90 comprises an uncertainty quantifier 119 operative to quantify, based on results obtained using the hazard function parameter value, an uncertainty of the prognostic and/or diagnostic data. The uncertainty may comprise an uncertainty of a RUL. The computerized asset maintenance system 90 comprises an interface controller 93 operative to control at least one interface 94 based on the uncertainty.

Fig. 12 is a flow chart of a method 110 of determining an uncertainty of asset-related quantities for an asset of an electric power system. The method 110 may be performed automatically by the processing system 30 or by a system comprising the processing system 30.

At process block 111, the hazard function for an asset is estimated, based on outage data. Process block 111 may be implemented as described in detail with reference to Fig. 1 to Fig. 7.

At process block 112, the processing system or a computing system different from the processing system uses the hazard function and diagnostic and/or prognostic information from condition assessments to provide an uncertainty quantification for the condition assessments.

Thereby, the hazard function is used to quantify uncertainties for condition assessment. Thereby, asset degradation and maintenance can be taken into account for quantifying the uncertainties that may stem from, e.g., asset degradation.

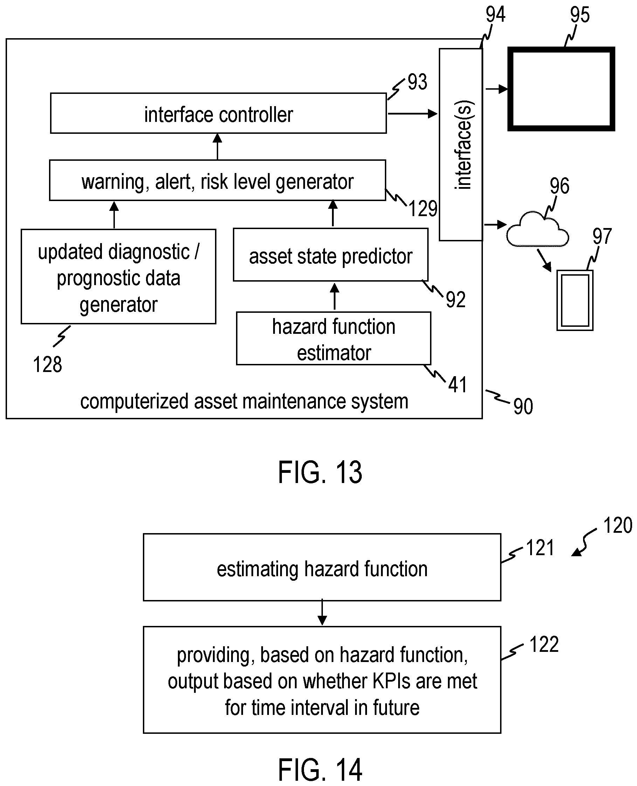

Fig. 13 is a block diagram of a computerized asset maintenance system 90. The computerized asset maintenance system 90 comprises the hazard function estimator 41 and the asset state predictor 92, which may be operative as previously described herein. The computerized asset maintenance system 90 further comprises a generator 128 operative to generate updated diagnostic and/or prognostic data related to an asset as additional information is available during field operation. The computerized asset maintenance system 90 comprises an output generator 129 operative to generate output comprising at least one of an alert, alarm, warning, risk level, or other indicator related to an asset of the electronic power system. The output generator 129 may be operative to determine, based on the results obtained by the asset state predictor 92 and the generator 128, whether and/or when an output action is to be triggered. For illustration, the computerized asset maintenance system 90 may be operative to selectively generate and provide output to indicate if, based on the results of the asset state predictor 92, the asset can reach an unacceptable state prior to the next planned maintenance. The computerized asset maintenance system 90 comprises an interface controller 93 operative to control at least one interface 94 based on the output generated by the output generator 129.

Fig. 14 is a flow chart of a method 120 of automatically generating an output for an electric power system, the output comprising at least one of an alert, alarm, warning, risk level, or other indicator related to an asset of the electronic power system. The method 120 may be performed automatically by the processing system 30 or by a system comprising the processing system 30.

At process block 121, the hazard function for an asset is estimated, based on outage data. Process block 121 may be implemented as described in detail with reference to Fig. 1 to Fig. 7.

At process block 122, the processing system or a computing system different from the processing system uses the hazard function and diagnostic and/or prognostic information as updated during field operation of the asset to determine whether a trigger criterion for generating the output is fulfilled.

Thereby, the hazard function is used to determine when the outputting of an alarm, alert, warning, risk level, or other data related to an asset is to be triggered. Thereby, asset degradation and maintenance can be taken into account for raising an alarm, alert, warning, risk level output, or other data output related to an asset.

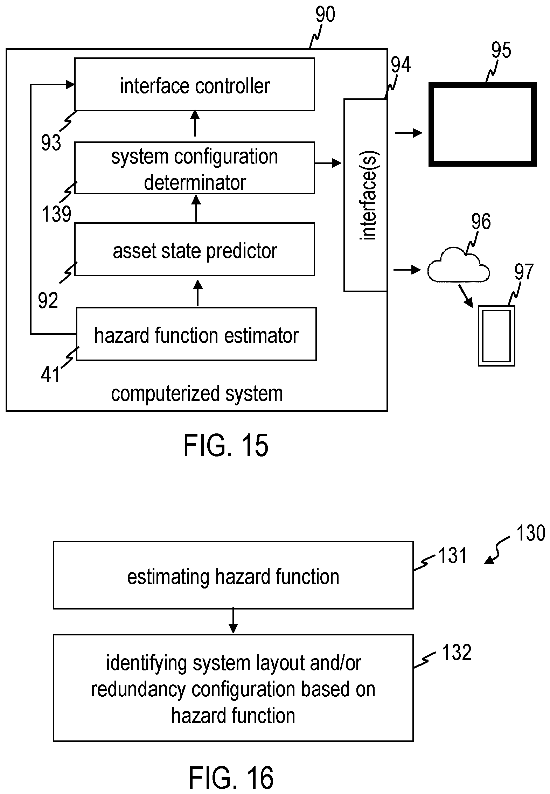

Fig. 15 is a block diagram of a computerized asset maintenance system 90. The computerized asset maintenance system 90 comprises the hazard function estimator 41 and the asset state predictor 92, which may be operative as previously described herein. The computerized asset maintenance system 90 further comprises a system configuration determinator 139 operative to determine an electric power system configuration that is suitable in view of the expected outages, e.g., by modifying or increasing the redundancy configuration. The computerized asset maintenance system 90 comprises an interface controller 93 operative to control at least one interface 94 based on the output generated by the system configuration determinator 139.

Fig. 16 is a flow chart of a method 130 of determining a system configuration (optionally a redundancy configuration) for an electric power system. The method 130 may be performed automatically by the processing system 30 or by a system comprising the processing system 30.

At process block 131, the hazard function for an asset is estimated, based on outage data. Process block 131 may be implemented as described in detail with reference to Fig. 1 to Fig. 7.

At process block 132, the processing system or a computing system different from the processing system uses the hazard function to determine a system configuration. Process block 132 may comprise determining a redundancy configuration for primary system equipment of the electric power system.

Thereby, the hazard function is used to determine which system configuration and/or which redundancy configuration of the electric power system is suitable based on the asset degradation expected based on the hazard function.

The processing system and method provide various technical effects in association with computerized asset maintenance. The processing system and method do not require the hazard function parameter value to be set based on an assumption, but are operative to determine the hazard function parameter value (e.g., the parameter value(s) for the Weibull function scale and/or shape parameters) in a data-driven manner. The processing system and method are, thus, operative to improve performance, operation, and maintenance of the asset and/or the electric power system. The processing system and method attain this by extracting the hazard function based on outage data. The processing system and method may apply the General Renewal Process together with Monte Carlo simulation of a system reliability block diagram.

Embodiments may be used in association with a power grid having renewables penetration, such as power grid comprising renewable energy systems (such as DERs), and/or HVDC systems, without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures, and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method for an asset state prediction for an electric power system (11, 20), the method comprising:
estimating, by at least one processing system (30), a hazard function, wherein the hazard function is indicative of a probability of asset failure as a function of a variable in absence of asset maintenance, wherein the hazard function has at least one hazard function parameter, wherein estimating the hazard function comprises:
accessing outage data (51) that comprise information on outages of electric power system assets (80) during field operation in presence of maintenance;
determining at least one maintenance parameter value that is dependent on the maintenance of the electric power system assets (80); and
determining a hazard function parameter value (53) for the at least one hazard function parameter, the hazard function parameter value (53) being determined based on both the outage data (51) and the at least one maintenance parameter value; and
providing, by the at least one processing system (30), or using, by the at least one processing system (30), the hazard function parameter value (53) for the asset state prediction.

2. The method of claim 1, wherein determining the at least one maintenance parameter value comprises accessing, by the at least one processing system (30), maintenance data (52) indicative of the maintenance for at least some of the electric power system assets (80), wherein the at least one maintenance parameter value is determined based on the maintenance data.

3. The method of claim 1 or claim 2, wherein determining the at least one maintenance parameter value comprises estimating the at least one maintenance parameter value, wherein estimating the at least one maintenance parameter value comprises:
setting at least one of a condition based maintenance, CBM, or predictive maintenance, PM, parameter value;
performing a CBM or PM simulation;
assessing an effectiveness of the at least one CBM or PM parameter value.

4. The method of any one of the preceding claims, wherein the at least one maintenance parameter value comprises at least one general renewal process, GRP, parameter value.

5. The method of any one of the preceding claims, wherein determining the hazard function parameter value (53) comprises an iterative process (70) including a plurality of iterations (71-73), each of the plurality of iterations comprising:
setting a candidate hazard function parameter value;
performing a repairable system simulation for at least one of the electric power system assets (80) using the candidate hazard function parameter value, the repairable system simulation comprising a stochastic modelling of asset degradation of the at least one of the electric power system asset in presence of maintenance; and
performing an evaluation of the candidate hazard function parameter value based on a comparison of the repairable system simulation and the outage data (51).

6. The method of claim 5, wherein the stochastic modelling is performed based on the at least one maintenance parameter value.

7. The method of any one of the preceding claims, wherein the hazard function is a Weibull function, and wherein the hazard function parameter value (53) is a Weibull function scale parameter value.

8. The method of any one of the preceding claims, further comprising performing, by the at least one processing system (30) or by a computing system (27) different from the at least one processing system (30), the asset state prediction using the hazard function parameter value (53).

9. The method of claim 8, wherein the asset state prediction comprises an asset state prediction over a predictive horizon (82), and wherein the method further comprises triggering, by the at least one processing system (30) or by the computing system (27), a control action based on the asset state prediction.

10. The method of claim 9, further comprising identifying, based on the asset state prediction over the predictive horizon (81), maintenance actions to be performed over the predictive horizon (81), wherein the control action is based on the maintenance actions.

11. The method of claim 9 or claim 10, wherein the control action comprises at least one of: a human machine interface control action; controlling a data interface to output control data based on the asset state prediction.

12. The method of any one of the preceding claims, wherein providing or using the hazard function parameter value (53) comprises one, several, or all of:
maintenance planning;
identifying an impact of several candidate maintenance scenarios on electric power system reliability and/or availability;
determining indicators that quantify a prediction uncertainty for asset and/or electric power system predictions, comprising processing the hazard function parameter value in combination with asset and/or electric power system prediction results;
automatically providing an output comprising a warning, alarm, and/or other information, comprising using the hazard function parameter value to determine whether a trigger criterion for providing the output is fulfilled based on the hazard function parameter value and maintenance schedule data;
determining an electric power system layout and/or a redundancy configuration of the electric power system.

13. The method of any one of the preceding claims, wherein the electric power system (11, 20) comprises at least one of: a power distribution grid; a power transmission grid; a distributed energy resource; a microgrid.

14. A processing system (30) for an asset state prediction for an electric power system (11, 20), the processing system comprising:
at least one interface (31, 32); and
at least one processing circuit (33) operative to perform a hazard function estimation to estimate a hazard function that is indicative of a probability of asset failure as a function of a variable in absence of asset maintenance, wherein the hazard function has at least one hazard function parameter, wherein the at least one processing circuit (33) is operative such that the hazard function estimation comprises:
accessing, via the at least one interface, outage data (51) that comprise information on outages of electric power system assets (80) during field operation in presence of maintenance;
determining at least one maintenance parameter value that is dependent on the maintenance of the electric power system assets (80); and
determining a hazard function parameter value (53) for the at least one hazard function parameter, the hazard function parameter value (53) being determined based
on both the outage data (51) and the at least one maintenance parameter value;
the at least one processing system (30) being operative to provide or use the hazard function parameter value (53) for the asset state prediction.

15. A system, comprising:
an electric power system (11, 20), the electric power system (11, 20) comprising:
a primary system (11) comprising assets;
a secondary system (20) comprising devices operative to perform control and/or monitoring functions in association with the primary system; and
the processing system of claim 14 operative to perform the asset state prediction for at least one of the assets.
